# EUROPÄISCHE PATENTSCHRIFT

(11) **EP 4 219 125 B1**
(45) Veröffentlichungstag und Bekanntmachung des Hinweises auf die Patenterteilung: **28.08.2024**
(21) Anmeldenummer: 22154280.6
(22) Anmeldetag: 31.01.2022
(51) Int. Cl.: B29C 51/26, B29C 51/10, B29C 51/14, B29K 105/24, B29L 9/00

(54) **ANORDNUNG SOWIE VERFAHREN ZUM HERSTELLEN EINES FORMTEILS**
ASSEMBLY AND METHOD FOR MANUFACTURING A MOULDED ITEM
AGENCEMENT, AINSI QUE PROCÉDÉ DE FABRICATION D'UNE PIÈCE MOULÉE

(43) Veröffentlichungstag der Anmeldung: 02.08.2023
(73) Patentinhaber: Geiss AG, 96145 Sesslach (DE)
(72) Erfinder: Daum, Wolfgang, 96145 Seßlach (DE)
(74) Vertreter: Isarpatent

(56) Entgegenhaltungen:
- EP-A1- 3 482 908
- US-A1- 2020 009 766
- US-A9- 2020 276 747

## Beschreibung

### GEBIET DER ERFINDUNG

Die Erfindung bezieht sich auf das Gebiet des Thermoformens, hierbei insbesondere auf das Gebiet des Herstellens von Formteilen mit UV-gehärteter Beschichtung, und betrifft eine Anordnung zum Herstellen eines Formteils, welche eine UV-Bestrahlungseinheit aufweist, sowie ein Verfahren zum Herstellen eines Formteils.

### TECHNISCHER HINTERGRUND

Anordnungen oder Maschinen zum Herstellen von Formteilen mittels Thermoformen dienen dazu, aus einem Ausgangsmaterial, welches beispielsweise flächig in Gestalt von Kunststofffolien oder Kunststoffplatten bereitgestellt wird, mit Hilfe der Einwirkung von Wärme Formteile zu erzeugen. Dies kann zum Beispiel in der Weise erfolgen, dass das Material, zum Beispiel ein folien- oder plattenförmiger thermoplastischer Kunststoff, zunächst eingespannt wird, dann mittels einer geeigneten Heizeinrichtung beheizt und dadurch erwärmt wird, und anschließend unter Zuhilfenahme eines geeigneten Formwerkzeugs in die gewünschte Form gebracht wird.

Das Ausgangsmaterial kann mit einer Beschichtung, etwa einem Lack, versehen sein, welche unter Bestrahlung mit ultravioletter Strahlung (nachfolgend als UV-Strahlung bezeichnet) aushärtet.

Bei einem herkömmlichen Verfahren zur Herstellung eines Formteils ausgehend von einem derartigen Material schließt sich nach dem Thermoformen und Entformen des umgeformten Materials ein weiterer Arbeitsgang an, in welchem das umgeformte Material mit UV-Strahlung bestrahlt wird, indem das Formteil auf einem Band abgelegt und auf diesem unter UV-Strahlern einer separaten Härteanlage hindurchbewegt wird. Dies erfordert eine Reihe von Arbeits- und Handhabungsschritten. Zudem ist hierbei bei dem UV-Bestrahlen meist große Vorsicht nötig, um ein erneutes, unerwünschtes Verformen des fertig geformten, oftmals dünnen Materials zu vermeiden.

Ein weiterer Weg zur UV-Bestrahlung einer UV-härtbaren Beschichtung ist beispielsweise in der EP 3 482 908 A1 beschrieben, wobei die Bestrahlung an einer Arbeitsstation einer Anordnung zum Thermoformen erfolgt. Die EP 3 482 908 A1 schlägt eine verfahrbare Bestrahlungseinheit vor. Um eine gute Bestrahlung der Außenoberfläche des thermogeformten Materials von mehr als einer Seite zu ermöglichen, beschreibt die EP 3 482 908 A1 zum Beispiel, eine Längsrichtung einer länglichen UV-Lampe schräg zu einer Verfahrrichtung der Bestrahlungseinheit auszurichten sowie die Bestrahlungseinheit zumindest abschnittsweise über einen von einer Ruhestellung der Bestrahlungseinheit aus gesehen distalen Rand eines Formwerkzeugs hinaus verlagerbar zu gestalten. Auf diese Weise können mit relativ geringem Aufwand Thermoform- und UV-Härtevorgänge rasch und effizient an ein und derselben Arbeitsstation durchgeführt und ein Formteil hoher Qualität erhalten werden. Ferner wird in der EP 3 482 908 A1 beschrieben, UV-Lampen relativ zueinander um ihre Längsrichtung verdreht in die Bestrahlungseinheit einzubauen.

Es hat sich jedoch gezeigt, dass die schräge Anordnung einer oder mehrerer UV-Lampen und ggf. deren verdrehter Einbau einen gewissen Montageaufwand erfordert, dessen weitere Verringerung wünschenswert wäre. Zudem hat sich gezeigt, dass das Hinausverlagern einer Bestrahlungseinheit über den distalen Rand des Formwerkzeugs für das Bestrahlungsergebnis vorteilhaft ist, aber Bauraum in Verfahrrichtung erfordert. Es wäre wünschenswert, eine gute Bestrahlung bei noch kompakterer, kostengünstigerer Bauweise und geringerem Platzbedarf zu erreichen.

### ZUSAMMENFASSUNG DER ERFINDUNG

Vor diesem Hintergrund ist es Aufgabe der vorliegenden Erfindung, Aufwand, Kosten und Platzbedarf für die UV-Bestrahlung bei der Herstellung von Formteilen mit UV-gehärteter Beschichtung weiter zu verringern.

Die Lösung dieser Aufgabe gelingt mit einer Anordnung zum Herstellen eines Formteils mit den Merkmalen des Anspruchs 1 und/oder einem Verfahren mit den Merkmalen des Anspruchs 16.

Demgemäß wird eine Anordnung zum Herstellen eines Formteils vorgeschlagen, wobei die Anordnung eine Arbeitsstation aufweist, welche ein Thermoformen eines Materials, das ein thermoplastisches Grundmaterial aufweist, ermöglicht, und die Anordnung eine UV-Bestrahlungseinheit aufweist, mittels der eine UV-härtbare Beschichtung des Materials an der Arbeitsstation mit UV-Strahlung bestrahlbar ist, umdie UV-härtbare Beschichtung des Materials mittels der UV-Strahlung zu härten. Hierbei ist die UV-Bestrahlungseinheit entlang einer Verfahrrichtung verfahrbar angeordnet. Ferner ist hierbei die UV-Bestrahlungseinheit mit einem Gehäuse ausgebildet, welches mindestens eine UV-Strahlungsquelle aufnimmt und auf einer zu einer Einspannebene der Arbeitsstation zum Einspannen des Materials weisenden Seite einen UV-Strahlungs-Austrittsbereich aufweist. Weiterhin weist hierbei die UV-Bestrahlungseinheit mindestens eine Reflektorfläche auf, die schräg geneigt zu dem UV-Strahlungs-Austrittsbereich und zu der Einspannebene ausgerichtet oder ausrichtbar ist und in Verfahrrichtung gesehen vorne oder hinten oder seitlich bezüglich des UV-Strahlungs-Austrittsbereichs angeordnet ist.

Ferner wird ein Verfahren zum Herstellen eines Formteils mittels einer derartigen Anordnung vorgeschlagen, wobei das Verfahren umfasst:
- Thermoformen eines Materials, aufweisend ein thermoplastisches Grundmaterial, unter Verwendung eines Formwerkzeugs; und
- Bestrahlen des thermogeformten Materials, während sich dieses noch auf dem Formwerkzeug befindet, mittels der UV-Bestrahlungseinheit mit UV-Strahlung zum Härten einer UV-härtbaren Beschichtung des Materials.

Eine der Erfindung zu Grunde liegende Idee besteht darin, Oberflächenabschnitte des thermogeformten Materials, die, insbesondere bedingt durch die Form des herzustellenden Formteils, zu dem UV-Strahlungs-Austrittsbereich stark geneigt und beispielsweise im Wesentlichen senkrecht oder ähnlich zu diesem verlaufen, mit Hilfe der Reflektorfläche zu bestrahlen. Mit Hilfe der Reflektorfläche gelingt es, UV-Strahlung auf derartige Oberflächenabschnitte zu leiten, diese dadurch gut zu bestrahlen, und somit mit einer kompakten UV-Bestrahlungseinheit die Härtung der UV-härtbaren Beschichtung an der Arbeitsstation in den gewünschten Oberflächenbereichen zu erzielen. Indem die Reflektorfläche vorne oder hinten oder seitlich - in der Verfahrrichtung betrachtet und bezüglich des UV-Strahlungs-Austrittsbereichs - angeordnet wird, können eine Anordnung einer UV-Lampe schräg zur Verfahrrichtung und damit einhergehender Aufwand und Platzbedarf vermieden werden. Zudem kann ein um deren Längsachse verdrehter Einbau einer UV-Lampe vermieden werden, was die Montage der Anordnung weiter erleichtert. Insbesondere kann die Erfindung hierbei auch eine Verminderung der Herstellkosten für die Anordnung ermöglichen.

Vorteilhafte Ausgestaltungen und Weiterbildungen der Erfindung ergeben sich aus den Unteransprüchen sowie aus der Beschreibung unter Bezugnahme auf die Figuren der Zeichnung.

In einer bevorzugten Ausgestaltung ist die Reflektorfläche seitlich bezüglich des UV-Strahlungs-Austrittsbereichs angeordnet, und die UV-Bestrahlungseinheit weist ferner mindestens eine weitere Reflektorfläche auf, die schräg geneigt zu dem UV-Strahlungs-Austrittsbereich und zu der Einspannebene ausgerichtet oder ausrichtbar ist und in Verfahrrichtung gesehen vorne oder hinten bezüglich des UV-Strahlungs-Austrittsbereichs angeordnet ist. Auf diese Weise können steile Abschnitte des umgeformten Materials, die zur Seite sowie nach vorne oder hinten weisen, bei relativ einfachem Aufbau der Anordnung zuverlässig UV-bestrahlt werden.

Insbesondere kann die UV-Bestrahlungseinheit in einer Ausgestaltung beidseits seitlich bezüglich des UV-Strahlungs-Austrittsbereichs jeweils mindestens eine schräg geneigt zu dem UV-Strahlungs-Austrittsbereich und zu der Einspannebene ausgerichtete oder ausrichtbare Reflektorfläche aufweisen. Somit kann die Bestrahlung seitlicher steiler Materialabschnitte weiter verbessert werden.

Weiterhin kann gemäß einer Ausgestaltung die UV-Bestrahlungseinheit vorne und hinten bezüglich des UV-Strahlungs-Austrittsbereichs jeweils mindestens eine schräg geneigt zu dem UV-Strahlungs-Austrittsbereich und zu der Einspannebene ausgerichtete oder ausrichtbare Reflektorfläche aufweisen. Somit kann die Bestrahlung von steilen Abschnitten, die entlang der Verfahrrichtung ausgerichtet sind, noch weiter verbessert werden.

Gemäß einer Weiterbildung ist eine Längsrichtung des UV-Strahlungs-Austrittsbereichs im Wesentlichen senkrecht zu der Verfahrrichtung angeordnet. Dies ermöglicht eine einfache Ausbildung und platzsparende Anordnung der UV-Bestrahlungseinheit.

Insbesondere ist die Längsrichtung des UV-Strahlungs-Austrittsbereichs im Wesentlichen parallel zu der Einspannebene ausgerichtet. Dies trägt ebenfalls zu einem einfachen Aufbau der Anordnung sowie zu einer vereinfachten Montage bei.

Insbesondere kann eine Längsrichtung des, bevorzugt quaderförmigen, Gehäuses der UV-Bestrahlungseinheit im Wesentlichen senkrecht zu der Verfahrrichtung und bevorzugt im Wesentlichen parallel zur Einspannebene angeordnet sein.

Der UV-Strahlungs-Austrittsbereich ist vorzugsweise im Wesentlichen rechteckig ausgebildet. Dies kann eine großflächige Bestrahlung beim Verfahren der UV-Bestrahlungseinheit erleichtern, die Anordnung der Reflektorfläche(n) vereinfachen und zu einem kompakten Aufbau der UV-Bestrahlungseinheit beitragen.

Insbesondere verläuft die Verfahrrichtung im Wesentlichen parallel zu der Einspannebene.

In einer Ausgestaltung weist die UV-Bestrahlungseinheit mindestens ein Reflektorelement auf, welches mit der Reflektorfläche oder einer der Reflektorflächen versehen ist, wobei das Reflektorelement mit dem Gehäuse der UV-Bestrahlungseinheit gekoppelt ist. Insbesondere kann auf diese Weise die Reflektorfläche durch Vorsehen eines zusätzlichen Elements, das mit dem Gehäuse gekoppelt wird, bereitgestellt werden, was zu einem einfachen Aufbau des Gehäuses beitragen kann. Alternativ kann das Reflektorelement bzw. können die Reflektorelemente einstückig mit dem Gehäuse ausgebildet und somit integral mit dem Gehäuse gekoppelt sein. In der letztgenannten Variante kann beispielsweise ein Arbeitsschritt eines Verbindens von Reflektorelement(en) und Gehäuse eingespart werden.

In einer Weiterbildung ist vorgesehen, dass das Reflektorelement an oder nahe einem Rand des Gehäuses angeordnet ist, wobei das Reflektorelement insbesondere bezüglich der Verfahrrichtung vorne oder hinten oder seitlich von einer Kante des Gehäuses schräg abstehend ausgerichtet oder ausrichtbar ist. Mit dieser Weiterbildung kann in einem Raumbereich, der sich über den Rand des Gehäuses hinaus erstreckt, UV-Strahlung auf das Material gelenkt werden und der Platzbedarf für das Gehäuse somit begrenzt werden.

Gemäß einer Ausgestaltung weist die Anordnung zwei oder mehr Reflektorelemente auf, welche jeweils mit einer der Reflektorflächen versehen sind. Hierbei ist mindestens an in Bezug auf die Verfahrrichtung seitlich am UV-Strahlungs-Austrittsbereich verlaufenden Rändern desselben jeweils mindestens eines der Reflektorelemente angeordnet. Insbesondere ist hierbei ferner an in der Verfahrrichtung gesehen vorne und hinten am UV-Strahlungs-Austrittsbereich verlaufenden Rändern desselben jeweils mindestens eines der Reflektorelemente angeordnet. Somit können seitlich sowie insbesondere auch vorne und hinten in Bezug auf den UV-Strahlungs-Austrittsbereich die Reflektorflächen für eine umfassende Bestrahlung des umgeformten Materials bereitgestellt werden.

Bei einer Weiterbildung ist vorgesehen, dass das Reflektorelement oder eines oder mehrere oder alle der Reflektorelemente jeweils zur Änderung einer Ausrichtung der Reflektorfläche des Reflektorelements verstellbar angeordnet ist oder sind, vorzugsweise verstellbar mit dem Gehäuse gekoppelt ist oder sind. Dies kann eine Anpassung des Reflektionsverhaltens durch die Reflektorfläche(n) und somit eine Anpassung der Bestrahlung steiler Oberflächenabschnitte bei einem Wechsel des Formwerkzeugs, etwa durch Einsatz eines Formwerkzeugs veränderter Geometrie und/oder Größe, ermöglichen. Bei einer alternativen Ausgestaltung können das oder die Reflektorelement(e) fest am Gehäuse angeordnet sein, was die Herstellung der Anordnung vereinfachen kann.

In einer Ausgestaltung kann vorgesehen sein, dass mehrere oder alle der Reflektorelemente unabhängig voneinander verstellbar sind. Dies kann die Flexibilität bei einem Wechsel der Formwerkzeuggeometrie noch weiter verbessern.

Gemäß einer weiteren Ausgestaltung kann vorgesehen sein, dass das Reflektorelement oder eines oder mehrere oder alle der Reflektorelemente manuell verstellbar ist/sind und/oder dass das Reflektorelement oder eines oder mehrere oder alle der Reflektorelemente mittels eines Aktuators oder mehrerer Aktuatoren verstellbar ist/sind. Eine manuelle Verstellung ist vergleichsweise einfach implementierbar, wohingegen die Nutzung des/der Aktuators/en, vorteilhaft in Kombination mit einer hierfür vorgesehenen Steuerung, eine noch einfachere, zeitsparendere und genauer reproduzierbare Verstellung ermöglicht.

Insbesondere kann jedem der Reflektorelemente ein eigener Aktuator für dessen Verstellung zugeordnet sein, oder es können alternativ mehrere oder alle der Reflektorelemente mittels eines gemeinsamen Aktuators verstellbar sein. Ein eigener Aktuator für jedes der Reflektorelemente ermöglicht eine weitreichende Flexibilität hinsichtlich der Verstellbarkeit, während die Verstellung mehrerer Reflektorelemente gemeinsam eine Einsparung an Aktuatoren erbringen kann.

In einer Ausgestaltung ist/sind das Reflektorelement oder eines oder mehrere oder alle der Reflektorelemente jeweils um eine Achse im Wesentlichen parallel zu einem Längsrand des Reflektorelements, insbesondere um eine Achse im Wesentlichen entlang des Längsrandes, verschwenkbar angeordnet. Dies trägt zu einer einfachen, effektiven und platzsparenden Verstellbarkeit zur Lenkung der UV-Strahlung bei.

Insbesondere erstreckt sich ein freier Längsrand der seitlich angeordneten Reflektorfläche(n) vorzugsweise jeweils im Wesentlichen parallel zur Verfahrrichtung und im Wesentlichen parallel zu der Einspannebene. Ferner erstreckt sich insbesondere ein freier Längsrand der vorne und/oder hinten angeordneten Reflektorfläche(n) vorzugsweise jeweils im Wesentlichen senkrecht zur Verfahrrichtung und im Wesentlichen parallel zur Einspannebene.

Bei einer bevorzugten Ausgestaltung weist die UV-Bestrahlungseinheit vier Reflektorflächen und vier Reflektorelemente auf, wobei jedes der Reflektorelemente eine der Reflektorflächen bereitstellt. Somit kann insbesondere bei einem rechteckigen UV-Strahlungs-Austrittsbereich in einfacher Weise an jeder Seite desselben eine Lenkung der UV-Strahlung und eine verbesserte Bestrahlung steiler Flächen des Materials erreicht werden.

Bei einer Ausgestaltung sind die Reflektorelemente jeweils rechteckig und langgestreckt ausgebildet. Derartige Reflektorelemente sind vergleichsweise einfach und kostengünstig herstellbar und bauraumsparend.

Insbesondere kann in einer Ausgestaltung vorgesehen sein, dass die Reflektorfläche oder eine oder mehrere oder alle der Reflektorflächen jeweils an einen zugeordneten Rand des UV-Strahlungs-Austrittsbereichs anschließt/anschließen. Dies kann zu einer effizienten und wirkungsvollen Bestrahlung des umgeformten Materials beitragen.

Bei einer Weiterbildung begrenzt das Gehäuse den UV-Strahlungs-Austrittsbereich entlang einer Begrenzung, die in einer Ebene im Wesentlichen parallel zu der Einspannebene angeordnet ist. Ein Gehäuse mit einem derartigen UV-Strahlungs-Austrittsbereich ist in relativ einfacher Weise herstellbar und montierbar.

In einer Ausgestaltung ist die UV-Strahlungsquelle länglich, und insbesondere röhrenförmig, ausgebildet, wobei eine Längsrichtung der UV-Strahlungsquelle im Wesentlichen senkrecht zu der Verfahrrichtung und insbesondere parallel zu der Einspannebene verläuft. Dies trägt wiederum zu einem einfachen Aufbau der Anordnung sowie zu einer einfachen Montage der UV-Strahlungsquelle(n) bei.

Insbesondere kann vorgesehen sein, dass das Material in einem Arbeitsbereich der Arbeitsstation unter Verwendung eines Formwerkzeugs der Thermoformung unterzogen werden kann und dass die UV-Bestrahlungseinheit aus einer Ruhestellung derselben außerhalb des Arbeitsbereichs zum Bestrahlen des Materials mit der UV-Strahlung in den Arbeitsbereich hinein und über das Formwerkzeug mit dem darauf befindlichen Material hinweg bewegt werden kann. Indem eine Ruhestellung vorgesehen ist, kann vermieden werden, dass die UV-Bestrahlungseinheit bei anderen Arbeitsgängen an der Arbeitsstation hinderlich ist. Zugleich kann vorteilhaft das Material nach dem Thermoformen, während es sich noch auf dem Formwerkzeug befindet, bestrahlt werden. In dieser Weise kann die UV-Bestrahlung an der gleichen Station wie das Aufheizen und Thermoformen erfolgen, was Handhabungsschritte einspart und zur Vermeidung einer eventuellen unerwünschten Deformation während des Bestrahlens eine Stützung des Materials bei der UV-Bestrahlung durch das Formwerkzeug bietet.

In einer bevorzugten Ausgestaltung ist die seitlich bezüglich des UV-Strahlungs-Austrittsbereichs angeordnete Reflektorfläche oder sind vorzugsweise beide seitlich bezüglich des UV-Strahlungs-Austrittsbereichs angeordneten Reflektorflächen derart angeordnet oder anordenbar, dass sie sich mindestens abschnittsweise zumindest über einen Teil eines bezüglich der Verfahrrichtung seitlichen Randes des Formwerkzeugs hinaus oder außerhalb dieses Randes erstrecken, während die UV-Bestrahlungseinheit über das Formwerkzeug hinwegbewegt wird. Auf diese Weise kann eine wirkungsvolle und möglichst vollständige UV-Bestrahlung der Formwerkzeugoberfläche und somit des auf dieser angeordneten Materials erfolgen, ohne dass es erforderlich ist, dass das Gehäuse selbst über den seitlichen Rand hinausragt.

Bei einer weiteren bevorzugten Ausgestaltung ist die vorne bezüglich des UV-Strahlungs-Austrittsbereichs angeordnete Reflektorfläche derart angeordnet oder anordenbar, dass sie mittels Verfahrens der UV-Bestrahlungseinheit entlang der Verfahrrichtung mindestens abschnittsweise über einen in der Verfahrrichtung beim Einfahren der UV-Bestrahlungseinheit in den Arbeitsbereich vorderen, von der Ruhestellung aus gesehen distalen Rand des Formwerkzeugs hinaus bewegbar ist. Auf diese Weise sind steile Abschnitte des Materials nahe dem distalen Rand des Formwerkzeugs ebenfalls zuverlässig bestrahlbar, bei gleichzeitiger Begrenzung des Verfahrwegs und damit des Platzbedarfs für die UV-Bestrahlungseinheit bei deren Verfahren, insbesondere des Platzbedarfs für das Gehäuse.

In einer bevorzugten Ausgestaltung ist die Arbeitsstation mit einem im Betrieb geschlossenen und abgedichteten Maschinengehäuse nach dem Closed-Chamber-Prinzip ausgebildet. Das geschlossene und dichte Maschinengehäuse ermöglicht es, ein Durchhängen des erwärmten, thermozuformenden Materials durch die Wahl eines geeigneten Innendrucks im Inneren des Maschinengehäuses zu vermeiden.

Insbesondere ist die Arbeitsstation der Anordnung für ein Thermoformen des Materials unter Nutzung von Vakuum oder Unterdruck, mithin zum Vakuumformen, ausgebildet.

Die obigen Ausgestaltungen und Weiterbildungen lassen sich, sofern dies sinnvoll ist, beliebig miteinander kombinieren. Weitere mögliche Ausgestaltungen, Weiterbildungen und Implementierungen der Erfindung umfassen auch nicht explizit genannte Kombinationen von zuvor oder im Folgenden in Bezug auf die Ausführungsbeispiele beschriebenen Merkmalen der Erfindung. Hierbei wird der Fachmann insbesondere auch Einzelaspekte als Verbesserungen oder Ergänzungen zu der jeweiligen Grundform der Erfindung hinzufügen.

### INHALTSANGABE DER ZEICHNUNG

Nachfolgend wird die Erfindung anhand der in den schematischen Figuren angegebenen Ausführungsbeispiele näher erläutert. Es zeigen
- Fig. 1: eine perspektivische Draufsicht auf eine Anordnung gemäß einem Ausführungsbeispiel;
- Fig. 2: eine Vorderansicht der Anordnung der Fig. 1;
- Fig. 3: eine Seitenansicht der Anordnung der Fig. 1;
- Fig. 4: eine Unteransicht (III) einer UV-Bestrahlungseinheit der Anordnung der Fig. 1-3, wie in Fig. 3 angedeutet;
- Fig. 5: einen vergrößerten Abschnitt eines mittels der Anordnung gemäß den Fig. 1-3 verarbeiteten Materials in einer schematischen Schnittansicht;
- Fig. 6: ein Detail einer Anordnung gemäß einem modifizierten Ausführungsbeispiel;
- Fig. 7: schematisch ein Verfahren zum Herstellen eines Formteils, das mittels der Anordnung gemäß dem Ausführungsbeispiel oder gemäß dem modifizierten Ausführungsbeispiel durchgeführt wird.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

In den Figuren der Zeichnungen sind gleiche, funktionsgleiche und gleich wirkende Elemente, Merkmale und Komponenten - soweit nichts anderes ausgeführt ist - jeweils mit denselben Bezugszeichen versehen. Die Elemente der Zeichnungen sind nicht notwendigerweise maßstabsgetreu zueinander dargestellt.

### BESCHREIBUNG VON AUSFÜHRUNGSBEISPIELEN

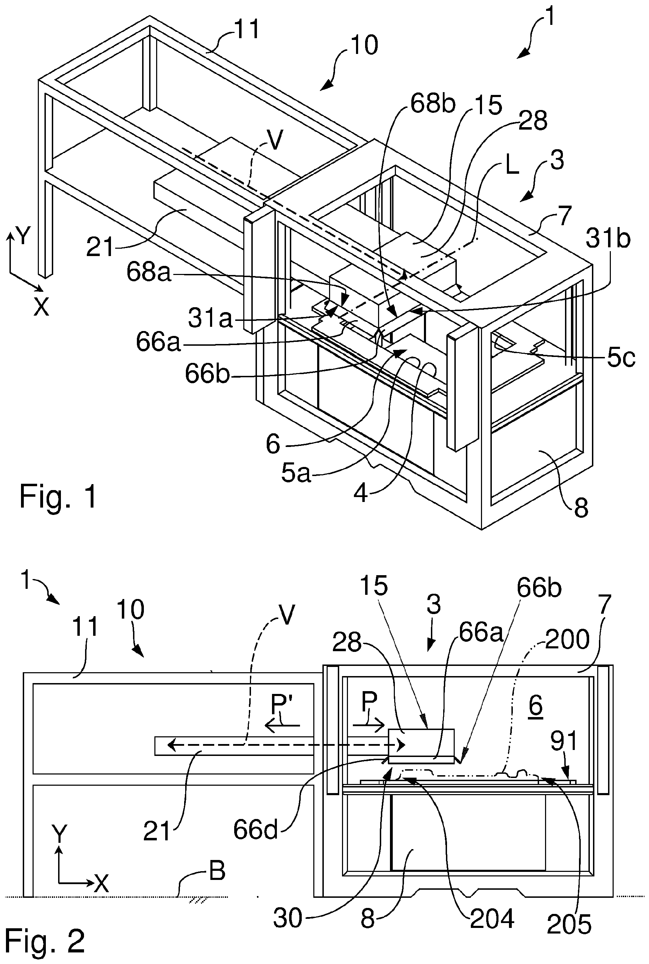

Fig. 1-3 zeigen eine Anordnung 1 zum Herstellen eines Formteils gemäß einem Ausführungsbeispiel. Die Anordnung 1 ist als eine Einstation-Thermoformmaschine mit einer Arbeitsstation 3 und einem an die Arbeitsstation 3 anschließend angeordneten UV-Bestrahlungsmodul 10 ausgebildet und auf einem im Wesentlichen horizontalen Boden B aufgestellt. Eine horizontale Richtung ist in Fig. 1, 2 mit X, eine vertikale Richtung mit Y bezeichnet. Die Anordnung 1 kann für einen automatisierten Betrieb ausgebildet sein. Ferner können die Arbeitsstation 3 und das UV-Bestrahlungsmodul 10 Bestandteile einer integralen Anordnung 1 sein oder stattdessen als zwei zunächst separat bereitgestellte Module bei der Bildung der Anordnung 1 zusammengefügt werden.

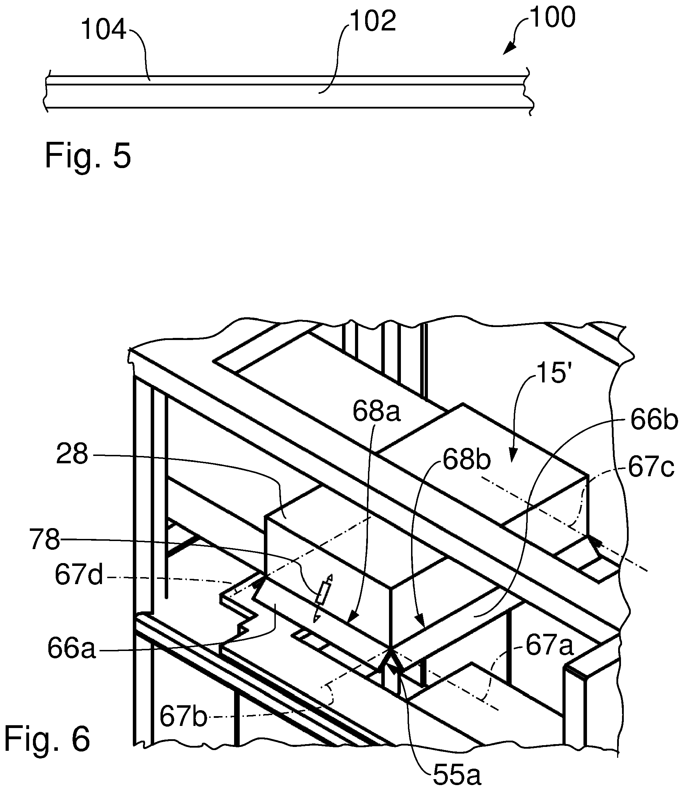

Mittels der Anordnung 1 können Formteile ausgehend von einem Material 100, das in Fig. 5 beispielhaft und schematisch im Schnitt in einem Ausgangszustand dargestellt ist, hergestellt werden. Das Material 100 ist flächig ausgebildet, etwa folien- oder plattenförmig, und weist ein thermoplastisches Kunststoff-Grundmaterial 102 sowie eine auf dem Grundmaterial 102 angeordnete, UV-härtbare Beschichtung 104 auf. Die Beschichtung 104 kann zum Beispiel mit einem durch UV-Bestrahlung aushärtbaren Lack gebildet sein, der als Schicht auf dem mit einem thermoplastischen Kunststoff gebildeten Grundmaterial 102 vorgesehen ist.

An der Arbeitsstation 3 kann das Material 100 mittels Thermoformen verarbeitet werden. Die Arbeitsstation 3 ist hierbei entsprechend einer so genannten Closed-Chamber-Bauweise ausgebildet und weist ein im Betrieb der Arbeitsstation 3 geschlossenes und abgedichtetes Maschinengehäuse 8 auf.

Fig. 1-3 zeigen, dass die Arbeitsstation 3 einen Arbeitsbereich 6 aufweist, in dem das Ausgangsmaterial 100 dem Thermoformen unterzogen werden kann. Auf einer Oberseite des Maschinengehäuses 8 weist die Arbeitsstation 3 in dem Arbeitsbereich 6 eine Formplatte mit einem Ausschnitt 4 auf. Das Material 100 ist für das Thermoformen, beispielsweise mittels eines in Fig. 1-3 oberhalb des Maschinengehäuses 8 vertikal verfahrbaren, nicht näher dargestellten Spannrahmens, in einer horizontalen Einspannebene 91 einspannbar. Die Einspannebene 91 ist hierbei im Bereich einer Oberseite der Formplatte angeordnet.

Für das Thermoformen wird das Material 100 dem Arbeitsbereich 6 zugeführt, in dem Arbeitsbereich 6 in der Einspannebene 91 eingespannt, auf eine für das Thermoformen geeignete Temperatur erwärmt und mittels eines Formwerkzeugs 200 in die gewünschte Form gebracht.

Eine Einrichtung zum Beschicken des Arbeitsbereichs 6 mit dem Material 100 sowie eine Heizeinrichtung zum Beheizen des eingespannten Materials 100 sind der besseren Übersicht halber in den Figuren nicht dargestellt.

In dem Ausschnitt 4 kann ein Formwerkzeug 200 angeordnet werden, siehe Fig. 2. Im Betrieb der Arbeitsstation 3 wird das Material 100 nach dem Einspannen und Beheizen desselben über das Formwerkzeug 200 gezogen. Das luftdurchlässig ausgebildete Formwerkzeug 200 kann mit Vakuum oder Unterdruck beaufschlagt werden, wodurch das Material 100 mittels des Umgebungsdrucks an eine Oberfläche des Formwerkzeugs 200 gepresst und somit in die angestrebte Form gebracht wird. Nach Abkühlen und Entformen liegt ein dreidimensionales Formteil vor.

Die geschlossene, im Betrieb dichte Ausbildung des Maschinengehäuses 8 ermöglicht eine Steuerung des Innenluftdrucks desselben, wodurch das Material 100 insbesondere in dessen erwärmtem Zustand unterstützt und zum Beispiel ein Durchhängen des erwärmten, eingespannten Materials 100 vermieden werden kann.

Die Einstation-Thermoformmaschine 1 ermöglicht somit die Arbeitsgänge des Einspannens und Beheizens des Materials 100 sowie das Thermoformen desselben an derselben Arbeitsstation 3. Zusätzlich kann an der Arbeitsstation 3 auch ein Bestrahlen des fertig umgeformten, noch auf dem Formwerkzeug 200 befindlichen Materials 100 mit UV-Strahlung durchgeführt werden, um die von der Oberfläche des Formwerkzeugs 200 abgewandte, UV-härtbare Beschichtung 104 auszuhärten.

Hierzu weist das Bestrahlungsmodul 10 eine UV-Bestrahlungseinheit 15 auf, die von einem verfahrbaren Wagen 21 getragen ist. Der Wagen 21 ist beispielsweise an einem Rahmen 11 des Bestrahlungsmoduls 10 verfahrbar gelagert. Die UV-Bestrahlungseinheit 15 kann somit zusammen mit dem sie tragenden Wagen 21 entlang einer im Wesentlichen horizontalen Verfahrrichtung V, die im Wesentlichen parallel zu der Einspannebene 91 ausgerichtet ist und im Wesentlichen parallel zu der Richtung X verläuft, verfahren werden.

Bei dem Ausführungsbeispiel der Fig. 1 können der Wagen 21 und die UV-Bestrahlungseinheit 15 in einer in den Figuren nicht gezeigten Ruhestellung außerhalb des Arbeitsbereichs 6 angeordnet werden. Der Wagen 21 und die UV-Bestrahlungseinheit 15 sind in deren Ruhestellung hierbei insbesondere innerhalb des Bestrahlungsmoduls 10 angeordnet. Insbesondere kann vorgesehen sein, dass die UV-Bestrahlungseinheit 15 sich während des Beschickens der Arbeitsstation 3 mit dem Material 100 in dessen Ausgangszustand, sowie während des Einspannens, Beheizens und Thermoformen des Materials 100, in der Ruhestellung befindet.

Aus der Ruhestellung kann die UV-Bestrahlungseinheit 15 durch Verfahren des Wagens 21 nach erfolgtem Umformen des Materials 100 zum Bestrahlen der UV-härtbaren Beschichtung 104 in den Arbeitsbereich 6 hineinbewegt werden. Hierbei kann die UV-Bestrahlungseinheit 15 über das Formwerkzeug 200 mit dem noch darauf befindlichen, thermogeformten Material 100 hinweg bewegt werden.

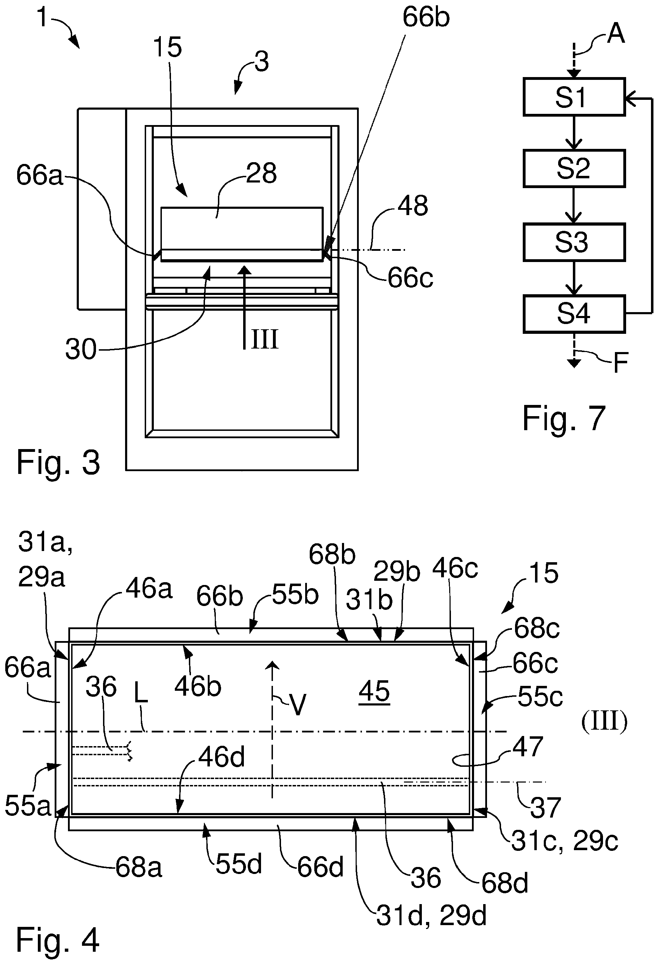

Die UV-Bestrahlungseinheit 15 weist ein kastenartiges, im Wesentlichen quaderförmiges Gehäuse 28 auf, welches längliche, insbesondere röhrenförmige, UV-Strahlungsquellen 36 aufnimmt. Eine Ansicht der UV-Bestrahlungseinheit 15 von einer in Fig. 2, 3 unteren Seite derselben zeigt Fig. 4. Die UV-Strahlungsquellen 36 weisen jeweils eine Längsrichtung 37 auf, die jeweils im Wesentlichen senkrecht zu der Verfahrrichtung V und parallel zu der Einspannebene 91 ausgerichtet ist.

Das Gehäuse 28 weist auf einer zu der Einspannebene 91 gerichteten und zu der Einspannebene 91 im Wesentlichen parallelen Unterseite 30 einen UV-Strahlungs-Austrittsbereich 45 auf. Von den UV-Strahlungsquellen 36 erzeugte UV-Strahlung verlässt das Gehäuse 28 durch den UV-Strahlungs-Austrittsbereich 45 in Richtung der Einspannebene 91. Der UV-Strahlungs-Austrittsbereich 45 kann beispielsweise als eine Öffnung in einer Wandung des Gehäuses 28 ausgebildet sein oder anstelle einer in Fig. 2, 3 unteren Wand des Gehäuses 28 auf der Seite 30 vorgesehen sein.

Fig. 4 zeigt, dass der UV-Strahlungs-Austrittsbereich 45 rechteckig ausgebildet ist und den größten Teil der Unterseite 30 des Gehäuses 28, bis auf einen schmalen Randbereich der Seite 30, einnimmt. Der UV-Strahlungs-Austrittsbereich 45 könnte jedoch stattdessen die gesamte Unterseite 30 einnehmen. In Fig. 4 ist zudem eine Längsrichtung L des UV-Strahlungs-Austrittsbereichs 45 als Längsmittelachse entlang dessen längerer Erstreckungsrichtung dargestellt. Die Längsrichtung L des UV-Strahlungs-Austrittsbereichs 45 ist quer und hierbei senkrecht zu der Verfahrrichtung V, und parallel zur Einspannebene 91 ausgerichtet.

Fig. 4 zeigt ferner Ränder 46a, 46b, 46c, 46d des UV-Strahlungs-Austrittsbereichs 45, die zusammen eine Begrenzung 47 desselben bilden, welche in einer Ebene 48 parallel zu der Einspannebene 91 verläuft, siehe auch Fig. 3.

Die UV-Bestrahlungseinheit 15 weist zusätzlich vier Reflektorelemente 66a, 66b, 66c, 66d mit jeweils einer von vier Reflektorflächen 55a, 55b, 55c bzw. 55d auf. Fig. 1-4 zeigen, dass die Reflektorelemente 66a, 66b, 66c und 66d jeweils an einem zugeordneten Rand 29a, 29b, 29c bzw. 29d des Gehäuses 28 an diesem angeordnet und mit dem Gehäuse 28 der UV-Bestrahlungseinheit 45 gekoppelt sind. Alternativ können die Reflektorelemente 66a-d beispielsweise nahe dem jeweils zugeordneten Rand 29a-d am Gehäuse 28 angeordnet sein. Jedes der Reflektorelemente 66a-d ist als ein flaches, langgestrecktes und rechteckiges Bauteil ausgebildet und trägt jeweils eine der Reflektorflächen 55a, 55b, 55c bzw. 55d. Von dem zugeordneten Rand 29a-d des Gehäuses 28, bei der es sich bei dem Ausführungsbeispiel jeweils um einen Teil eines unteren, die untere Seite 30 begrenzenden Randes des quaderartigen Gehäuses 28 handelt, steht jedes der vier Reflektorelemente 66a-d vom Gehäuse 28 ab.

Die Fig. 1-4 zeigen, dass die beiden kürzeren, seitlichen Reflektorelemente 66a und 66c entlang und nahe zweier Seitenränder 46a bzw. 46c des UV-Strahlungs-Austrittsbereichs 45 angeordnet sind. Bezüglich der Verfahrrichtung V verlaufen die Ränder 46a, 46c seitlich am UV-Strahlungs-Austrittsbereich 45.

Ferner sind die beiden anderen, längeren Reflektorelemente 66b, 66d, d.h. das vordere Reflektorelement 66b und das hintere Reflektorelement 66d, entlang und nahe eines vorderen Randes 46b bzw. eines hinteren Randes 46d des UV-Strahlungs-Austrittsbereichs 45 angeordnet. Bezüglich der Verfahrrichtung V verläuft also der Rand 46b vorne am UV-Strahlungs-Austrittsbereich 45, der Rand 46d hinten am UV-Strahlungs-Austrittsbereich 45, gesehen mit einer Orientierung längs der Verfahrrichtung V bei Einfahren der UV-Bestrahlungseinheit 15 in den Arbeitsbereich 6.

Auf diese Weise schließt jede der Reflektorflächen 55a-d jeweils an den zugeordneten Rand 46a-d des UV-Strahlungs-Austrittsbereichs 45 direkt oder, wie in Fig. 4, mit einem geringen Versatz durch einen umlaufenden Rand des UV-Strahlungs-Austrittsbereichs 45, an.

Bei dem Ausführungsbeispiel der Fig. 1-4 können die Reflektorelemente 66a, 66b, 66c, 66d mit einer festen Ausrichtung an dem Gehäuse 28 angeordnet sein, derart, dass jedes der flachen Reflektorelemente 66a-d von einer jeweils zugeordneten Kante 31a, 31b, 31c oder 31d des Gehäuses 28 schräg absteht. Die seitlichen Reflektorelemente 66a, 66c stehen hierbei bezüglich der Verfahrrichtung V seitlich von den Kanten 31a, 31c nach außen geneigt ab, das vordere Reflektorelement 66b steht in Verfahrrichtung V vorne von der Kante 31b nach außen geneigt ab, und das hintere Reflektorelement 66d steht in Verfahrrichtung V hinten von der Kante 31d nach außen geneigt ab.

Die Reflektorelemente 66a-d können als separate Bauteile oder stattdessen jeweils einstückig mit einer Wandung des Gehäuses 28 ausgebildet sein.

Auf diese Weise ist jede der Reflektorflächen 55a-d schräg geneigt zu dem UV-Strahlungs-Austrittsbereich 45, der durch die Begrenzung 47 in der Ebene 48 parallel zu der Einspannebene 91 eingegrenzt ist, ausgerichtet. Ferner ist jede der Reflektorflächen 55a-d hierbei auch schräg zu der Einspannebene 91 ausgerichtet.

Jede der Reflektorflächen 55a-d ist bei dem Ausführungsbeispiel der Fig. 1-4 im Wesentlichen eben.

Die Neigung jeder der Reflektorflächen 55a-d bezüglich der Einspannebene 91 kann beispielsweise in etwa 45 Grad betragen, wobei andere Neigungswinkel und/oder unterschiedliche Neigungswinkel für verschiedene der Reflektorflächen 55a-d denkbar sind.

In Verfahrrichtung V gesehen sind bezüglich des UV-Strahlungs-Austrittsbereichs 45 die Reflektorfläche 55b vorne, die Reflektorfläche 55d hinten, und die Reflektorflächen 55a, 55c seitlich angeordnet.

Die Ränder 29a, 29c, 46a, 46c und die Kanten 31a, 31c verlaufen jeweils parallel zu der Einspannebene 91 und parallel zu der Verfahrrichtung V. Die Ränder 29b, 29d, 46b, 46d und die Kanten 31b, 31d verlaufen jeweils parallel zu der Einspannebene 91 und parallel zu der Verfahrrichtung V.

Vorzugsweise sind, siehe Fig. 4, die Reflektorelemente 66a, 66c symmetrisch in Bezug auf eine Mittelachse des UV-Strahlungs-Austrittsbereichs 45 entlang der Verfahrrichtung V, und die Reflektorelemente 66b, 66d symmetrisch in Bezug auf die Längsmittelachse L des UV-Strahlungs-Austrittsbereichs 45, die senkrecht zur Verfahrrichtung V verläuft, angeordnet. Insbesondere können die längeren Reflektorelemente 66b, 66d gleich geformt sein, und es können die kürzeren Reflektorelemente 66a, 66c gleich geformt sein.

Somit sind an der UV-Bestrahlungseinheit 15 beidseits seitlich relativ zu dem UV-Strahlungs-Austrittsbereich 45 die beiden Reflektorflächen 55a, 55c sowie entlang der Verfahrrichtung V vorne und hinten relativ zu dem UV-Strahlungs-Austrittsbereich 45 die Reflektorflächen 55b, 55d angeordnet.

Die UV-Einheit 15 trägt somit Reflektoren 66a-d an mehreren Stellen entlang ihres der Einspannebene 91 zugewandten unteren Randes, welche die UV-Strahlung an die jeweiligen steil geneigten oder vertikalen Oberflächenabschnitte des umgeformten Materials 100, insbesondere Seitenwände, leiten. Diese Oberflächenabschnitte oder Seitenwände werden somit ebenfalls zuverlässig bestrahlt, womit eine zuverlässige Härtung der UV-härtbaren Beschichtung 104 auch in diesen Oberflächenabschnitten gelingt. Die Reflektoren 66a-d ermöglichen eine vereinfachte Bauweise der Anordnung 1. Insbesondere kann ein im Wesentlichen quaderförmiges Gehäuse 28 mit einer Längsachse, die im Wesentlichen parallel zu der Längsrichtung L in Fig. 1, 4 verläuft, senkrecht zu der Verfahrrichtung montiert werden, wodurch in Verfahrrichtung V weniger Bauraum benötigt wird und die UV-Bestrahlungseinheit 15 bevorzugt höchstens einen relativ geringen Weg über einen von dem Bestrahlungsmodul 10 aus gesehen distalen Rand 205 des Formwerkzeugs 200 hinweg verfährt, um die gesamte Formoberfläche des Formwerkzeugs 200 zuverlässig bestreichen zu können.

Bei einer vorteilhaften Variante des vorstehend beschriebenen Ausführungsbeispiels können die Reflektorelemente 66a-d, oder zumindest eines oder mehrere dieser, zur Änderung einer Ausrichtung der Reflektorfläche 55a, 55b, 55c, 55d des Reflektorelements 66a, 66b, 66c bzw. 66d verstellbar mit dem Gehäuse 28 gekoppelt sein. Auf diese Weise können die Reflektorelemente 66a-d, oder eines oder mehrere dieser, in der oben beschriebenen Weise von der jeweils zugeordneten Kante 31a-d schräg abstehend ausgerichtet werden, wobei insbesondere der Neigungswinkel der Reflektorelemente 66a-d bezüglich der Ebenen 91, 48 jeweils einstellbar ist. Hierdurch sind die Reflektorflächen 55a-d, oder eine oder mehrere dieser, jeweils schräg bezüglich der Einspannebene 91 und des UV-Strahlungs-Austrittsbereichs 45 anordenbar wie vorstehend beschrieben.

Beispielsweise können mehrere oder alle der Reflektorelemente 66a-d unabhängig voneinander verstellbar angeordnet sein. Die Verstellung eines oder mehrerer der Reflektorelemente 66a-d kann manuell erfolgen.

Über Vorstehendes hinausgehend entspricht die vorstehende Variante mit verstellbaren Reflektorelementen 66a-d dem Ausführungsbeispiel der Fig. 1-4.

Bei einer weiteren Modifikation des Ausführungsbeispiels der Fig. 1-4, das darüber hinausgehend in gleicher Weise wie oben beschrieben ausgebildet ist, ist anstelle einer manuellen Verstellung eine aktuatorbetätigte Verstellung eines, mehrerer oder aller der Reflektorelemente 66a-d vorgesehen. Fig. 6 zeigt beispielhaft für eine UV-Bestrahlungseinheit 15' eines derart modifizierten Ausführungsbeispiels schematisch einen Aktuator 78, mittels desselben das seitliche Reflektorelement 66a relativ zur Einspannebene 91 und zu dem UV-Strahlungs-Austrittsbereich 45 verschwenkt werden kann. Weitere, nicht dargestellte Aktuatoren können jeweils dem Verschwenken eines der anderen Reflektorelemente 66b-d dienen. Mithin kann jedes Reflektorelement 66a-d mit einem eigens zugeordneten Aktuator versehen sein, und die Reflektorelemente 66a-d können unabhängig voneinander und flexibel aktuatorbetätigt verstellt werden. Alternativ ist es denkbar, einige oder alle Reflektorelemente 66a-d mittels eines gemeinsamen Antriebs bzw. Aktuators zu verstellen.

Die manuelle oder aktuatorbetätigte Verstellung der Reflektorelemente 66a-d oder eines oder mehrerer dieser ermöglicht eine verbesserte Anpassungsfähigkeit der UV-Bestrahlungseinheit 15, 15' etwa bei einem Wechsel des Formwerkzeugs 200. Steile Flächen können auf diese Weise noch zuverlässiger UV-bestrahlt werden.

Der bzw. die Aktuator(en) 78 kann/können vorzugsweise mittels der Maschinensteuerung der Anordnung 1 angesprochen und beispielsweise programmbasiert gesteuert werden.

Bei einem manuellen oder aktuatorbetätigten Verstellen eines, mehrerer oder aller der Reflektorelemente 66a-d verschwenken diese bei den oben erläuterten Modifikationen und Varianten des Ausführungsbeispiels bevorzugt jeweils um eine Achse 67a-d, die parallel zu einem Längsrand 68a-d und insbesondere im Wesentlichen entlang des Längsrandes 68a, 68b, 68c bzw. 68d des jeweiligen Reflektorelements 66a, 66b, 66c bzw. 66d, verläuft. Beispielsweise verschwenkt also das Reflektorelement 66a um eine Achse 67a entlang des Längsrands 68a des Reflektorelements 66a, siehe Fig. 4 und 6, wobei Analoges für die anderen Reflektorelemente 66b-d gilt.

Fig. 7 illustriert ein Verfahren zum Herstellen eines Formteils, das mittels einer Anordnung 1 gemäß dem Ausführungsbeispiel oder einer der vorbeschriebenen Varianten desselben, insbesondere der Modifikation der Fig. 6, durchgeführt werden kann.

In Fig. 7 ist mit Bezugszeichen A das Zuführen des Ausgangsmaterials 100, das wie in Fig. 5 illustriert und oben erläutert ausgebildet ist, zu der Arbeitsstation 3 bezeichnet.

Nachfolgend wird an der Arbeitsstation 3 im Schritt S1 das Material 100 für das Thermoformen an der Arbeitsstation 3 vorbereitet und hierzu in der Einspannebene 91 eingespannt und nachfolgend mittels einer Heizeinrichtung auf eine für das Thermoformen geeignete Temperatur erwärmt. Ein Innenraum des Maschinengehäuses 8 wird in gesteuerter Weise unter Innenluftdruck gesetzt, um beispielsweise das Durchhängen des Materials 100 unter dessen Eigengewicht zu beeinflussen oder zu vermeiden.

Im Schritt S2 erfolgt das Thermoformen des Materials 100. Hierbei wird das erwärmte Material 100 über das Formwerkzeug 200 gezogen und, durch Unterdruck bzw. Vakuum unterstützt, auf dessen Oberfläche gepresst und hierdurch in die gewünschte Form gebracht.

Während der Schritte S1 und S2 ist die UV-Bestrahlungseinheit 15 bzw. 15' in ihrer Ruhestellung außerhalb des Arbeitsbereichs 6 angeordnet.

In einem danach folgenden weiteren Schritt S3 wird das noch auf dem Formwerkzeug 200 befindliche, bereits geformte Material 100, dessen Beschichtung 104 von der Oberfläche des Formwerkzeugs 200 weg nach außen weist, mit UV-Strahlung bestrahlt, um die Beschichtung 104 auszuhärten. Hierzu wird die UV-Bestrahlungseinheit 15 oder 15' mit aktivierten UV-Strahlungsquellen 36 in der Verfahrrichtung V aus ihrer Ruhestellung in dem Bestrahlungsmodul 10 in den Arbeitsbereich 6 translatorisch geradlinig hinein verfahren, wie durch den Pfeil P in Fig. 2 angedeutet. Die UV-Bestrahlungseinheit 15 überfährt hierbei einen proximalen Rand 204 des Formwerkzeugs 200, überstreicht das auf dem Formwerkzeug 200 befindliche Material 100 mit der UV-Strahlung, die durch den UV-Strahlungs-Austrittsbereich 45 abgegeben wird, und kann den distalen Rand 205 um einen relativ geringen Weg überfahren, wobei zumindest das vordere Reflektorelement 66b wenigstens abschnittsweise über den distalen Rand 205 hinaus verlagert werden kann, ohne jedoch viel Platz einzunehmen. Während der Bewegung entlang der Verfahrrichtung V und relativ zu dem Material 100 gibt somit die UV-Bestrahlungseinheit 15, 15' UV-Strahlung ab.

Mit Hilfe der vorderen und hinteren Reflektorelemente 66b, 66d kann die Beschichtung 104 an steilen oder vertikalen Oberflächenabschnitten des auf die Formoberfläche des Formwerkzeugs 200 angelegten, umgeformten Materials 100, die quer zur Verfahrrichtung V verlaufen, zuverlässig bestrahlt werden, um auch dort mit der UV-Strahlung auf die Beschichtung 104 zuverlässig einzuwirken.

Mit den seitlich angeordneten Reflektorelementen 66a, 66c ragt die UV-Bestrahlungseinheit 15 oder 15' in einer Richtung senkrecht zur Verfahrrichtung V, mithin entlang der Längsrichtung L des UV-Strahlungs-Austrittsbereichs 45, über seitliche Ränder des Formwerkzeugs 200 hinaus. Fig. 1 verdeutlicht, dass zumindest die Reflektorelemente 66a, 66c jeweils über einen benachbarten seitlichen Rand 5a, 5c des Ausschnitts 4 seitlich hinausragen oder sich außerhalb desselben befinden können. Auf diese Weise wird es möglich, seitliche steile oder senkrechte Oberflächenabschnitte des umgeformten Materials 100 ebenfalls zuverlässig zu bestrahlen.

Mittels Reflektion leiten somit die Reflektorflächen 55a-d UV-Strahlung auf Oberflächenabschnitte des Materials 100, die bei direkter Bestrahlung entlang der vertikalen Richtung Y von oben alleine aufgrund ihrer Steilheit bezüglich der horizontalen Einspannebene 91 weniger gut erreichbar wären. Vorzugsweise wird es somit möglich, während des Verfahrens der UV-Bestrahlungseinheit 15 oder 15' längs der Verfahrrichtung V die gesamte Formoberfläche des Formwerkzeugs 200 zuverlässig mit der UV-Strahlung zu erreichen.

Bei dem Bestrahlen im Schritt S3 kann ein Unterdruck am Formwerkzeug 200 aufrechterhalten werden, wodurch das Material 100 in Kontakt mit dem Formwerkzeug 200 bleibt und eine verbesserte Unterstützung und Wärmeabfuhr ermöglicht wird.

Nach Abschluss des Bestrahlens und Herausfahren der UV-Bestrahlungseinheit 15 bzw. 15' in Richtung P' entgegengesetzt zu der Pfeilrichtung P aus dem Arbeitsbereich 6 wird in einem Schritt S4 das Formteil entformt.

Erwähnt sei, dass auch während der Bewegung in Pfeilrichtung P' ein Bestrahlen des Materials 100 erfolgen kann, d.h. die UV-Strahlungsquellen 36 aktiviert sein können.

Anschliessend wird das fertige Formteil aus dem Arbeitsbereich 6 heraus verbracht, wie mittels Bezugszeichen F in Fig. 7 angedeutet. Zur Herstellung einer Vielzahl von Formteilen werden die Schritte S1-S4 unter Zuführen A weiteren Materials 100 und Entladen der Fertigteile F wiederholt.

Die ausgehärtete Beschichtung 104 kann dem Formteil das gewünschte Erscheinungsbild sowie weitere gewünschte Oberflächeneigenschaften verleihen. Das Formteil kann sehr geringe Wandstärken aufweisen und vorteilhaft mittels der Anordnung 1 ohne unerwünschte Verformung direkt und mit geringem Aufwand auf dem Formwerkzeug 200 UV-bestrahlt werden.

### Liste der Bezugszeichen

- 1: Anordnung
- 3: Arbeitsstation
- 4: Ausschnitt (Formplatte)
- 5a, 5c: seitlicher Rand (Ausschnitt)
- 6: Arbeitsbereich
- 7: Rahmen (Arbeitsstation)
- 8: Maschinengehäuse (Arbeitsstation)
- 10: Bestrahlungsmodul
- 11: Rahmen (Bestrahlungsmodul)
- 15, 15': UV-Bestrahlungseinheit
- 21: Wagen
- 28: Gehäuse
- 29a-d: Rand (Gehäuse)
- 30: Seite (Gehäuse)
- 31a-d: Kante (Gehäuse)
- 36: UV-Strahlungsquelle
- 37: Längsrichtung (UV-Strahlungsquelle)
- 45: UV-Strahlungs-Austrittsbereich
- 46a-d: Rand (UV-Strahlungs-Austrittsbereich)
- 47: Begrenzung (UV-Strahlungs-Austrittsbereich)
- 48: Ebene des UV-Strahlungs-Austrittsbereichs
- 55a-d: Reflektorfläche
- 66a-d: Reflektorelement
- 67a-d: Achse
- 68a-d: Längsrand (Reflektorelement)
- 78: Aktuator
- 91: Einspannebene
- 100: Material
- 102: thermoplastisches Grundmaterial
- 104: UV-härtbare Beschichtung
- 200: Formwerkzeug
- 204: proximaler Rand
- 205: distaler Rand
- B: Boden
- F: Fertigteil-Entladen
- L: Längsrichtung (UV-Strahlungs-Austrittsbereich)
- P: Einfahren
- P': Herausfahren
- A: Ausgangsmaterial-Zuführen
- V: Verfahrrichtung (UV-Bestrahlungseinheit)
- X: horizontale X-Richtung
- Y: vertikale Y-Richtung

- S1: Verfahrensschritt
- S2: Verfahrensschritt
- S3: Verfahrensschritt
- S4: Verfahrensschritt

## Patentansprüche

1. Anordnung (1) zum Herstellen eines Formteils,
mit einer Arbeitsstation (3), welche ein Thermoformen eines Materials (100), das ein thermoplastisches Grundmaterial (102) aufweist, ermöglicht; und
mit einer UV-Bestrahlungseinheit (15; 15'), mittels der eine UV-härtbare Beschichtung (104) des Materials (100) an der Arbeitsstation (3) mit UV-Strahlung bestrahlbar ist, um die UV-härtbare Beschichtung (104) des Materials (100) mittels der UV-Strahlung zu härten;
wobei die UV-Bestrahlungseinheit (15; 15') entlang einer Verfahrrichtung (V) verfahrbar angeordnet ist;
wobei die UV-Bestrahlungseinheit (15; 15') mit einem Gehäuse (28) ausgebildet ist, welches mindestens eine UV-Strahlungsquelle (36) aufnimmt und auf einer zu einer Einspannebene (91) der Arbeitsstation (3) zum Einspannen des Materials (100) weisenden Seite (30) einen UV-Strahlungs-Austrittsbereich (45) aufweist; und
wobei die UV-Bestrahlungseinheit (15; 15') mindestens eine Reflektorfläche (55a-55d) aufweist, die schräg geneigt zu dem UV-Strahlungs-Austrittsbereich (45) und zu der Einspannebene (91) ausgerichtet oder ausrichtbar ist und in Verfahrrichtung (V) gesehen vorne oder hinten oder seitlich bezüglich des UV-Strahlungs-Austrittsbereichs (45) angeordnet ist.

2. Anordnung nach Anspruch 1,
**dadurch gekennzeichnet, dass** die Reflektorfläche (55a, 55c) seitlich bezüglich des UV-Strahlungs-Austrittsbereichs (45) angeordnet ist und die UV-Bestrahlungseinheit (15; 15') ferner mindestens eine weitere Reflektorfläche (55b, 55d) aufweist, die schräg geneigt zu dem UV-Strahlungs-Austrittsbereich (45) und zu der Einspannebene (91) ausgerichtet oder ausrichtbar ist und in Verfahrrichtung (V) gesehen vorne oder hinten bezüglich des UV-Strahlungs-Austrittsbereichs (45) angeordnet ist.

3. Anordnung nach Anspruch 1 oder 2,
**dadurch gekennzeichnet, dass** eine Längsrichtung (L) des UV-Strahlungs-Austrittsbereichs (45) im Wesentlichen senkrecht zu der Verfahrrichtung (V) angeordnet ist, wobei der UV-Strahlungs-Austrittsbereich (45) vorzugsweise im Wesentlichen rechteckig ausgebildet ist.

4. Anordnung nach wenigstens einem der vorstehenden Ansprüche, **dadurch gekennzeichnet, dass** die Verfahrrichtung (V) im Wesentlichen parallel zu der Einspannebene (91) verläuft.

5. Anordnung nach wenigstens einem der vorstehenden Ansprüche, **dadurch gekennzeichnet, dass** die UV-Bestrahlungseinheit (15; 15') mindestens ein Reflektorelement (66a-66d) aufweist, welches mit der Reflektorfläche (55a-55d) oder einer der Reflektorflächen (55a-55d) versehen ist, wobei das Reflektorelement (66a-66d) mit dem Gehäuse (28) der UV-Bestrahlungseinheit (15) gekoppelt ist.

6. Anordnung nach Anspruch 5,
**dadurch gekennzeichnet, dass** das Reflektorelement (66a-66d) an oder nahe einem Rand (29a-d) des Gehäuses (28) angeordnet ist, insbesondere bezüglich der Verfahrrichtung (V) vorne oder hinten oder seitlich von einer Kante (31a-d) des Gehäuses (28) schräg abstehend ausgerichtet oder ausrichtbar ist.

7. Anordnung nach Anspruch 5 oder 6,
**dadurch gekennzeichnet, dass** die Anordnung (1) zwei oder mehr Reflektorelemente (66a-66d) aufweist, welche jeweils mit einer der Reflektorflächen (55a-55d) versehen sind, wobei mindestens an in Bezug auf die Verfahrrichtung (V) seitlich am UV-Strahlungs-Austrittsbereich (45) verlaufenden Rändern (46a, 46c) desselben jeweils mindestens eines der Reflektorelemente (66a, 66c) angeordnet ist, und insbesondere wobei ferner an in der Verfahrrichtung (V) gesehen vorne und hinten am UV-Strahlungs-Austrittsbereich (45) verlaufenden Rändern (46b, 46d) desselben jeweils mindestens eines der Reflektorelemente (66b, 66d) angeordnet ist.

8. Anordnung nach wenigstens einem der Ansprüche 5 bis 7,
**dadurch gekennzeichnet, dass** das Reflektorelement (66a-66d) oder eines oder mehrere oder alle der Reflektorelemente (66a-66d) jeweils zur Änderung einer Ausrichtung der Reflektorfläche (55a-55d) des Reflektorelements (66a-66d) verstellbar angeordnet ist/sind, vorzugsweise verstellbar mit dem Gehäuse (28) gekoppelt ist/sind.

9. Anordnung nach wenigstens einem der Ansprüche 5 bis 8,
**dadurch gekennzeichnet, dass** das Reflektorelement (66a-66d) oder eines oder mehrere oder alle der Reflektorelemente (66a-66d) manuell verstellbar ist/sind und/oder dass das Reflektorelement (66a-66d) oder eines oder mehrere oder alle der Reflektorelemente (66a-66d) mittels eines Aktuators (78) oder mehrerer Aktuatoren (78) verstellbar ist/sind.

10. Anordnung nach wenigstens einem der vorstehenden Ansprüche, **dadurch gekennzeichnet, dass** das Reflektorelement (66a-66d) oder eines oder mehrere oder alle der Reflektorelemente (66a-66d) jeweils um eine Achse (67a-67d) im Wesentlichen parallel zu einem Längsrand (68a-68d) des Reflektorelements (66a-66d), insbesondere um eine Achse (67a-67d) im Wesentlichen entlang des Längsrandes (68a-68d), verschwenkbar angeordnet ist/sind.

11. Anordnung nach wenigstens einem der vorstehenden Ansprüche, **dadurch gekennzeichnet, dass** die Reflektorelemente (66a-66d) jeweils rechteckig und langgestreckt ausgebildet sind.

12. Anordnung nach wenigstens einem der vorstehenden Ansprüche, **dadurch gekennzeichnet, dass** die Reflektorfläche (55a-55d) oder eine oder mehrere oder alle der Reflektorflächen (55a-55d) jeweils an einen zugeordneten Rand (46a-d) des UV-Strahlungs-Austrittsbereichs (45) anschließt/anschließen.

13. Anordnung nach wenigstens einem der vorstehenden Ansprüche, **dadurch gekennzeichnet, dass** das Gehäuse (28) den UV-Strahlungs-Austrittsbereich (45) entlang einer Begrenzung (47) begrenzt, die in einer Ebene (48) im Wesentlichen parallel zu der Einspannebene (91) angeordnet ist.

14. Anordnung nach wenigstens einem der vorstehenden Ansprüche, **dadurch gekennzeichnet, dass** die UV-Strahlungsquelle (36) länglich, und insbesondere röhrenförmig, ausgebildet ist, wobei eine Längsrichtung (37) der UV-Strahlungsquelle (36) im Wesentlichen senkrecht zu der Verfahrrichtung (V) und insbesondere parallel zu der Einspannebene (91) verläuft.

15. Anordnung nach wenigstens einem der vorstehenden Ansprüche, **dadurch gekennzeichnet, dass** das Material (100) in einem Arbeitsbereich (6) der Arbeitsstation (3) unter Verwendung eines Formwerkzeugs (200) der Thermoformung unterzogen werden kann und dass die UV-Bestrahlungseinheit (15; 15') aus einer Ruhestellung derselben außerhalb des Arbeitsbereichs (6) zum Bestrahlen des Materials (100) mit der UV-Strahlung in den Arbeitsbereich (6) hinein und über das Formwerkzeug (200) mit dem darauf befindlichen Material (100) hinweg bewegt werden kann.

16. Verfahren zum Herstellen eines Formteils mittels einer Anordnung (1) gemäß einem der vorstehenden Ansprüche, wobei das Verfahren umfasst:
- Thermoformen (S2) eines Materials (100), aufweisend ein thermoplastisches Grundmaterial (102), unter Verwendung eines Formwerkzeugs (200); und
- Bestrahlen (S3) des thermogeformten Materials (100), während sich dieses noch auf dem Formwerkzeug (200) befindet, mittels der UV-Bestrahlungseinheit (15; 15') mit UV-Strahlung zum Härten einer UV-härtbaren Beschichtung (104) des Materials (100).

## Claims

1. Arrangement (1) for producing a moulded part,
comprising a workstation (3) which enables thermoforming of a material (100) comprising a thermoplastic base material (102); and
comprising a UV irradiation unit (15; 15'), by means of which a UV-curable coating (104) of the material (100) can be irradiated with UV radiation at the workstation (3) so as to cure the UV-curable coating (104) of the material (100) by means of the UV radiation;
wherein the UV irradiation unit (15; 15') is arranged to be displaceable along a displacement direction (V); wherein the UV irradiation unit (15; 15') is formed with a housing (28) which accommodates at least one UV radiation source (36) and has a UV radiation exit region (45) on a side (30) facing a clamping plane (91) of the workstation (3) for clamping the material (100); and
wherein the UV irradiation unit (15; 15') has at least one reflector face (55a-55d) which is or can be orientated obliquely at an inclination to the UV radiation exit region (45) and to the clamping plane (91) and is arranged at the front or rear or side with respect to the UV radiation exit region (45) as seen in the displacement direction (V).

2. Arrangement according to claim 1,
**characterised in that** the reflector face (55a, 55c) is arranged at the side with respect to the UV radiation exit region (45), and the UV irradiation unit (15; 15') further has at least one further reflector face (55b, 55d) which is or can be orientated obliquely at an inclination to the UV radiation exit region (45) and to the clamping plane (91) and is arranged at the front or rear with respect to the UV radiation exit region (45) as seen in the displacement direction (V).

3. Arrangement according to either claim 1 or claim 2, **characterised in that** a longitudinal direction (L) of the UV radiation exit region (45) is arranged substantially perpendicular to the displacement direction (V), the UV radiation exit region (45) preferably being formed substantially rectangular.

4. Arrangement according to at least one of the preceding claims,
**characterised in that** the displacement direction (V) extends substantially parallel to the clamping plane (91).

5. Arrangement according to at least one of the preceding claims,
**characterised in that** the UV irradiation unit (15; 15') has at least one reflector element (66a-66d) which is provided with the reflector face (55a-55d) or one of the reflector faces (55a-55d), the reflector element (66a-66d) being coupled to the housing (28) of the UV irradiation unit (15).

6. Arrangement according to claim 5,
**characterised in that** the reflector element (66a-66d) is arranged on or near an edge (29a-d) of the housing (28), and in particular is or can be orientated projecting obliquely from an edge (31a-d) of the housing (28), at the front or rear or side with respect to the displacement direction (V).

7. Arrangement according to either claim 5 or claim 6, **characterised in that** the arrangement (1) has two or more reflector elements (66a-66d), each of which is provided with one of the reflector faces (55a-55d), at least one of the reflector elements (66a, 66c) in each case being arranged at least on edges (46a, 46c) of the UV radiation exit region (45) which extend at the side with respect to the displacement direction (V) at said region, and in particular at least one of the reflector elements (66b, 66d) in each case further being arranged on edges (46b, 46d) of the UV radiation exit region (45) which extend at the front and rear of said region as seen in the displacement direction (V).

8. Arrangement according to at least one of claims 5 to 7, **characterised in that** the reflector element (66a-66d) or one or more or all of the reflector elements (66a-66d) are each arranged adjustably for changing an orientation of the reflector face (55a-55d) of the reflector element (66a-66d), preferably being adjustably coupled to the housing (28) .

9. Arrangement according to at least one of claims 5 to 8, **characterised in that** the reflector element (66a-66d) or one or more or all of the reflector elements (66a-66d) are manually adjustable, and/or **in that** the reflector element (66a-66d) or one or more or all of the reflector elements (66a-66d) are adjustable by means of an actuator (78) or a plurality of actuators (78).

10. Arrangement according to at least one of the preceding claims,
**characterised in that** the reflector element (66a-66d) or one or more or all of the reflector elements (66a-66d) are each arranged pivotably about an axis (67a-67d) substantially parallel to a longitudinal edge (68a-68d) of the reflector element (66a-66d), in particular about an axis (67a-67d) substantially along the longitudinal edge (68a-68d) .

11. Arrangement according to at least one of the preceding claims,
**characterised in that** the reflector elements (66a-66d) are each formed rectangular and elongate.

12. Arrangement according to at least one of the preceding claims,
**characterised in that** the reflector face (55a-55d) or one or more or all of the reflector faces (55a-55d) each adjoin an associated edge (46a-d) of the UV radiation exit region (45) .

13. Arrangement according to at least one of the preceding claims,
**characterised in that** the housing (28) delimits the UV radiation exit region (45) along a boundary (47) which is arranged in a plane (48) substantially parallel to the clamping plane (91).

14. Arrangement according to at least one of the preceding claims,
**characterised in that** the UV radiation source (36) is formed elongate, and in particular tubular, a longitudinal direction (37) of the UV radiation source (36) extending substantially perpendicular to the displacement direction (V) and in particular parallel to the clamping plane (91).

15. Arrangement according to at least one of the preceding claims,
**characterised in that** the material (100) can be subjected to thermoforming in a work area (6) of the workstation (3) using a moulding tool (200), and **in that** the UV irradiation unit (15; 15') can be moved from a rest position thereof outside the work area (6) into the work area (6) and over the moulding tool (200) with the material (100) located thereon, so as to irradiate the material (100) with the UV radiation.

16. Method for producing a moulded part by means of an arrangement (1) according to any of the preceding claims, the method comprising:
- thermoforming (S2) a material (100) comprising a thermoplastic base material (102) using a moulding tool (200); and
- irradiating (S3) the thermoformed material (100), while it is still on the moulding tool (200), with UV radiation by means of the UV irradiation unit (15; 15') so as to cure a UV-curable coating (104) of the material (100).

## Revendications

1. Agencement (1) pour la fabrication d'une pièce moulée, avec un poste de travail (3) qui permet un thermoformage d'un matériau (100) qui présente un matériau de base thermoplastique (102) ; et
avec une unité d'irradiation UV (15 ; 15'), au moyen de laquelle un revêtement (104) durcissable par UV du matériau (100) peut être irradié par un rayonnement UV au poste de travail (3), afin de durcir le revêtement (104) durcissable par UV du matériau (100) au moyen du rayonnement UV ; dans lequel l'unité d'irradiation UV (15 ; 15') est disposée de manière déplaçable le long d'une direction de déplacement (V) ;
dans lequel l'unité d'irradiation UV (15 ; 15') est réalisée avec un boîtier (28) qui reçoit au moins une source de rayonnement UV (36) et présente une zone de sortie de rayonnement UV (45) sur un côté (30) orienté vers un plan de serrage (91) du poste de travail (3) destiné à serrer le matériau (100) ; et
dans lequel l'unité d'irradiation UV (15 ; 15') présente au moins une surface réflectrice (55a-55d) qui est orientée ou peut être orientée de manière inclinée par rapport à la zone de sortie de rayonnement UV (45) et par rapport au plan de serrage (91) et qui est disposée à l'avant, à l'arrière ou latéralement par rapport à la zone de sortie de rayonnement UV (45), vue dans la direction de déplacement (V) .

2. Agencement selon la revendication 1,
**caractérisé en ce que** la surface réflectrice (55a, 55c) est disposée latéralement par rapport à la zone de sortie de rayonnement UV (45) et l'unité d'irradiation UV (15 ; 15') présente en outre au moins une autre surface réflectrice (55b, 55d) qui est orientée ou peut être orientée de manière inclinée par rapport à la zone de sortie de rayonnement UV (45) et par rapport au plan de serrage (91) et qui est disposée à l'avant ou à l'arrière par rapport à la zone de sortie de rayonnement UV (45), vue dans la direction de déplacement (V).

3. Agencement selon la revendication 1 ou 2,
**caractérisé en ce qu'**une direction longitudinale (L) de la zone de sortie de rayonnement UV (45) est disposée sensiblement perpendiculairement à la direction de déplacement (V), la zone de sortie de rayonnement UV (45) étant de préférence de forme sensiblement rectangulaire.

4. Agencement selon au moins l'une des revendications précédentes,
**caractérisé en ce que** la direction de déplacement (V) est sensiblement parallèle au plan de serrage (91).

5. Agencement selon au moins l'une des revendications précédentes,
**caractérisé en ce que** l'unité d'irradiation UV (15 ; 15') présente au moins un élément réflecteur (66a-66d) qui est pourvu de la surface réflectrice (55a-55d) ou de l'une des surfaces réflectrices (55a-55d), l'élément réflecteur (66a-66d) étant couplé au boîtier (28) de l'unité d'irradiation UV (15).

6. Agencement selon la revendication 5,
**caractérisé en ce que** l'élément réflecteur (66a-66d) est disposé sur ou à proximité d'un bord (29a-d) du boîtier (28), en particulier est orienté ou peut être orienté en saillie oblique à l'avant, à l'arrière ou latéralement par rapport à la direction de déplacement (V) à partir d'un bord (31a-d) du boîtier (28).

7. Agencement selon la revendication 5 ou 6,
**caractérisé en ce que** l'agencement (1) présente deux ou plusieurs éléments réflecteurs (66a-66d) qui sont chacun pourvus d'une des surfaces réflectrices (55a-55d), dans lequel chaque fois au moins un des éléments réflecteurs (66b, 66d) est disposé au moins sur des bords (46a, 46c) de la zone de sortie de rayonnement UV (45) s'étendant latéralement à celle-ci, vu dans la direction de déplacement (V), et en particulier dans lequel au moins un des éléments réflecteurs (66b, 66d) est en outre disposé sur des bords (46b, 46d) de la zone de sortie de rayonnement UV (45) s'étendant à l'avant et à l'arrière de celle-ci, vu dans la direction de déplacement (V).

8. Agencement selon au moins l'une des revendications 5 à 7, **caractérisé en ce que** l'élément réflecteur (66a-66d), ou un ou plusieurs ou tous les éléments réflecteurs (66a-66d) est/sont disposé(s) de manière réglable, de préférence couplé(s) de manière réglable au boîtier (28), pour modifier une orientation de la surface réflectrice (55a-55d) de l'élément réflecteur respectif (66a-66d).

9. Agencement selon au moins l'une des revendications 5 à 8, **caractérisé en ce que** l'élément réflecteur (66a-66d) ou un ou plusieurs ou tous les éléments réflecteurs (66a-66d) est/sont réglable(s) manuellement et/ou **en ce que** l'élément réflecteur (66a-66d) ou un ou plusieurs ou tous les éléments réflecteurs (66a-66d) est/sont réglable(s) au moyen d'un actionneur (78) ou de plusieurs actionneurs (78).

10. Agencement selon au moins l'une des revendications précédentes,
**caractérisé en ce que** l'élément réflecteur (66a-66d) ou un ou plusieurs ou tous les éléments réflecteurs (66a-66d) est/sont disposé(s) de manière à pouvoir pivoter chacun autour d'un axe (67a-67d) sensiblement parallèle à un bord longitudinal (68a-68d) de l'élément réflecteur (66a-66d), en particulier autour d'un axe (67a-67d) s'étendant sensiblement le long du bord longitudinal (68a-68d).

11. Agencement selon au moins l'une des revendications précédentes,
**caractérisé en ce que** les éléments réflecteurs (66a-66d) sont chacun de forme rectangulaire et allongée.

12. Agencement selon au moins l'une des revendications précédentes,
**caractérisé en ce que** la surface réflectrice (55a-55d) ou une ou plusieurs ou toutes les surfaces réflectrices (55a-55d) se raccorde(nt) chacune à un bord associé (46a-d) de la zone de sortie de rayonnement UV (45).

13. Agencement selon au moins l'une des revendications précédentes,
**caractérisé en ce que** le boîtier (28) délimite la zone de sortie de rayonnement UV (45) le long d'une limite (47) qui est disposée dans un plan (48) sensiblement parallèle au plan de serrage (91).

14. Agencement selon au moins l'une des revendications précédentes,
**caractérisé en ce que** la source de rayonnement UV (36) est de forme allongée, et en particulier tubulaire, une direction longitudinale (37) de la source de rayonnement UV (36) étant sensiblement perpendiculaire à la direction de déplacement (V) et en particulier parallèle au plan de serrage (91).

15. Agencement selon au moins l'une des revendications précédentes,
**caractérisé en ce que** le matériau (100) peut être soumis à un thermoformage dans une zone de travail (6) du poste de travail (3) en utilisant un moule (200) et **en ce que** l'unité d'irradiation UV (15 ; 15') peut être déplacée depuis une position de repos de celle-ci à l'extérieur de la zone de travail (6) dans la zone de travail (6) et par-dessus le moule (200) avec le matériau (100) placé sur celui-ci pour irradier le matériau (100) avec le rayonnement UV.

16. Procédé de fabrication d'une pièce moulée au moyen d'un agencement (1) selon l'une des revendications précédentes, le procédé comprenant de :
- thermoformer (S2) un matériau (100) présentant un matériau de base thermoplastique (102) en utilisant un moule (200) ; et
- irradier (S3) le matériau thermoformé (100), tandis que celui-ci se trouve encore sur le moule (200), au moyen de l'unité d'irradiation UV (15 ; 15') avec un rayonnement UV pour durcir un revêtement (104) durcissable par UV du matériau (100).
